(19) Europäisches Patentamt
European Patent Office
Office Européen des brevets

(11) Veröffentlichungsnummer: **0 208 867 B1**

(12) # EUROPÄISCHE PATENTSCHRIFT

(45) Veröffentlichungstag der Patentschrift: **02.01.91 Patentblatt 91/01**

(51) Int. Cl.$^5$: **C08G 18/80**, C08G 18/32, C08G 18/42, C08G 18/76, C08G 18/75, C09D 5/44

(21) Anmeldenummer: **86106578.7**

(22) Anmeldetag: **14.05.86**

(54) **Vernetzungskomponenten für Lackbindemittel und Verfahren zu deren Herstellung.**

(30) Priorität: **29.05.85 AT 1602/85**

(43) Veröffentlichungstag der Anmeldung: **21.01.87 Patentblatt 87/04**

(45) Bekanntmachung des Hinweises auf die Patenterteilung: **02.01.91 Patentblatt 91/01**

(84) Benannte Vertragsstaaten: **BE CH DE FR GB IT LI NL SE**

(56) Entgegenhaltungen:
**EP-A- 0 053 766**
**EP-A- 0 083 232**

(56) Entgegenhaltungen:
**FR-A- 2 241 573**
**US-A- 4 409 381**
**US-A- 4 410 678**
**US-A- 4 439 593**

(73) Patentinhaber: **VIANOVA KUNSTHARZ AKTIENGESELLSCHAFT**
**Postfach 191 Leechgasse 21**
**A-8011 Graz (AT)**

(72) Erfinder: **Plum, Helmut, Dr.**
**Nibelungenstrasse 3**
**D-6204 Taunusstein 4 (DE)**
Erfinder: **Paar, Willibald, Dr.**
**Richard Wagnergasse 46**
**A-8010 Graz (AT)**

**EP 0 208 867 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Herstellung von Vernetzungskomponenten für Hydroxyl- und/oder primäre und/oder sekundäre Aminogruppen aufweisende Lackbindemittel, die nach diesem Verfahren hergestellen Vernetzungskomponenten sowie die Verwendung solcher Vernetzungskomponenten zur Härtung von Kunstharzen, die mindestens zwei zur Ester- und/oder Amidbildung mit Carbonsäuren befähigte Gruppen aufweisen. Insbesonders betrifft die Erfindung die Verwendung der Vernetzungskomponenten in Zubereitungen für die Elektrotauchlackierung (ETL).

Lagerstabile 2-Komponentenlacke aus zur Amid- oder Urethanbildung befähigten Polymeren und blockierten Isocyanaten sind aus der US-PS 2,995,531 bekannt. Gemäß der DE-OS 20 57 799 können solche Kombinationen auch zur Formulierung von kathodisch abscheidbaren ET-Lacken dienen. Einkomponentensysteme, bei denen ein teilweise blockiertes Polyisocyanat über eine Urethangruppierung an ein Polymeres gebunden ist, werden in der DE-OS 20 20 905 oder der DE-OS 22 52 536 beschrieben. Systeme dieser Art haben den Nachteil, daß sie relativ hohe Einbrenntemperaturen verlangen und die Einbrennverluste einen nicht unbedeutenden Teil des Bindemittelanteils darstellen. Niedere Alkanole, wie Methanol oder Ethanol können als Blockierungsmittel nicht verwendet werden, da diese Urethane unterhalb ca. 250°C stabil sind.

Hohe Einbrenntemperaturen und bedeutende Abspaltverluste weisen auch die in der EP-B1-00 12 463 beschriebenen Systeme aus Aminopolyesterpolyolen und β-Hydroxyalkylestern auf, die durch eine Umesterungsreaktion härten.

Aus der EP-B1-00 82 291 ist es weiters bekannt, Mischester der Malonsäure, z. B. Trimethylolpropantrimalonsäureethylester als Härter für zur Amid- oder Esterbildung befähigte Basiskunstharze einzusetzen. Diese Härter weisen zwar relativ niedrige Einbrennverluste auf, als Abspaltprodukt bildet sich im wesentlichen nur das unproblematische Ethanol. In wäßrigen Systemen für die kathodische Elektrotauchlackierung zeigen diese Härtungskomponenten jedoch Mängel bezüglich ihrer Hydrolysestabilität, sodaß es schwierig ist, die pH- und MEQ-Werte der Bäder konstant zu halten.

In der DE-OS 33 15 569 werden als Härtungskomponenten für die kathodische Elektrotauchlackierung Michael-Additionsprodukte, die aus CH-aktiven Mono- oder Dicarbonsäureestern hergestellt werden, beschrieben. Mit diesen Verbindungen läßt sich nur in Gegenwart von Katalysatoren (z. B. Bleisalzen) eine Minimumeinbrenntemperatur von 140 - 160°C erreichen.

Es ist bekannt, (Petersen, Taube ; Liebigs Ann.Chem. 562, (1949) 205) daß sich aus Isocyanaten und Malonsäuredialkylestern in Gegenwart von Natrium oder Natriumalkoholaten als Katalysatoren Verbindungen mit einer Methantricarbonsäuredialkylestermonoamid-Struktureinheit herstellen lassen, die bereits ab ca. 130°C mit Polyolen unter Vernetzung reagiert.

Diese Reaktion wurde in der Folge vielfach zur Herstellung von Härtungskomponenten für flüssige Einbrennlacke oder Einbrennlacke mit organischen Lösungsmitteln verwendet.

So wird in der DE-OS 23 42 603 ein Verfahren zur Herstellung von Malonsäuredialkylester-blockierten Biuretpolyisocyanaten beschrieben. Dabei wird zunächst in einer verhältnismäßig umständlichen Zweistufenreaktion (Herstellung eines Gemisches aus Biuretpolyisocyanat und monomerem Diisocyanat und anschließende Entfernung des monomeren Diisocyanates) ein monomerenfreies Biuretpolyisocyanat hergestellt, das dann mit Malonsäuredialkylester umgesetzt wird. Bevorzugt wird ein stöchiometrischer Überschuß an Malonsäuredialkylester eingesetzt, sodaß das Reaktionsgemisch nicht umgesetzten Malonsäuredialkylester enthält, der nicht an der Vernetzungsreaktion teilnehmen und sich deshalb auf die Filmeigenschaften negativ auswirken kann.

Ein speziell verkapptes Isocyanat, das durch Umsetzung von 3-Isocyanatomethyl-3,5,5-trimethylcyclohexylisocyanat und 2 Mol Malonsäuredialkylester hergestellt worden ist, wird in der DE-OS 24 36 877 beschrieben.

Aus der DE-OS 25 50 156 ist ein Verfahren zur Herstellung von in Locklösemitteln leicht löslichen Polyisocyanatgemischen mit "blockierten" Isocyanatgruppen bekannt, bei welchem das 3-Isocyanatomethyl-3,5,5-trimethylcyclohexylisocyanat vor der Reaktion mit dem CH-aktiven Blokkierungsmittel partiell mit einem Polyol umgesetzt wird.

In der DE-OS 27 23 117 wird die Mitverwendung von malonester "verkappten" Diisocyanaten bei der Formulierung von Einbrennlacken aus Aminoplastharzen und Polyolen beschrieben. Die Anwesenheit des Aminoplastharzes ist unbedingt erforderlich, um Filme mit einer ausreichenden Härte zu erhalten.

Die in den DE-OSS 23 42 603, 24 36 877, 25 50 156 beschriebenen "verkappten" Polyisocyanate lassen sich im Prinzip auch in Zubereitungen für die kathodische Elektrotauchlackierung verwenden, wenn sie mit basischen Kunstharzen, die nach einer Teilneutralisation mit Säure wasserverdünnbar sind, kombiniert werden. Bei niedrigen Einbrenntemperaturen von z. B. 140°C erhält man jedoch in den meisten Fällen

Beschichtungen, deren Härte und Lösungsmittelbeständigkeit nicht ausreichend sind. Auch die Mitverwendung von Aminoplastharzen, wie sie in der DE-OS 27 23 117 beschrieben wird, bringt keine Vorteile ; wahrscheinlich werden die zur Härtung der Aminoplastharze erforderlichen Katalysatoren - i. a. Sulfonsäure - durch die basischen Kunstharze neutralisiert und damit unwirksam.

Es besteht also die Aufgabe, eine Härtungskomponente zu finden, die mit Hydroxyl- und/oder Aminogruppen aufweisenden, kationischen, nach zumindest teilweiser Protonierung wasserverdünnbaren Kunstharzen bei möglichst niedriger Temperatur härtet. Die Härtungskomponente soll in Systemen für die kathodische Elektrotauchlackierung hinreichend stabil sein. Bei der Härtung sollen nur kleine Mengen an Abspaltprodukten entstehen, die die Umwelt nicht oder nur wenig belasten.

Es wurde nun gefunden, daß Umsetzungsprodukte aus CH-aktiven Alkylestern, Diisocyanaten und Polyaminen und/oder (Poly)aminoalkoholen in Kombination mit Hydroxyl- und/oder Aminogruppen aufweisenden Kunstharzen schon ab 120°C Überzüge mit hervorragenden lacktechnischen Eigenschaften bilden. Setzt man als CH-aktive Alkylester die Methyl- oder Ethylester ein, sind die Abspaltverluste besonders niedrig, wobei die Ethylester bezüglich der Abspaltprodukte außerdem besonders unbedenklich sind. Die Härtungskomponenten sind in Systemen für die kathodische Elektrotauchlackierung über längere Zeiträume stabil.

Die vorliegende Erfindung betrifft demgemäß ein Verfahren zur Herstellung von Vernetzungskomponenten für Hydroxyl-und/oder primäre und/oder sekundäre Aminogruppen aufweisende Lackbindemittel, welches dadurch gekennzeichnet ist, daß man 1 Mol eines Diisocyanates in einer ersten Stufe, vorzugsweise bei Raumtemperatur, in Gegenwart von 0,1 bis 0,5 Gew.-%, bezogen auf das Gesamtgewicht der Reaktionsmasse, an Natrium oder vorzugsweise Natriumphenolat als Katalysator, mit 1,0 bis 1,5 Mol eines CH-aktiven Alkylesters der allgemeinen Formel X - $CH_2$ - COOR, wobei X = COOR, - CN oder $CH_3$ - CO - und R einen Alkylrest mit 1 bis 8 C-Atomen bedeutet, umsetzt und die freien Isocyanatgruppen des Reaktionsproduktes in einer zweiten Stufe mit stöchiometrisch äquivalenten Mengen von Polyaminen der Formel

$$H_2N - (R - NH)_n - R - NH_2,$$

mit n = 0 bis 3 und/oder von (Poly)aminoalkoholen der Formel

$$H_2N - (R - NH)_n - R - OH,$$

mit n = 0 bis 3, oder

$$HO - (R - NH)_n - R - OH,$$

mit n = 1 bis 3, wobei R in allen Fällen einen Alkylenrest darstellt, reagiert.

Die Erfindung betrifft weiters die gemäß den beanspruchten Verfahren hergestellten Produkte sowie deren Verwendung als Vernetzungskomponente zur Härtung von Polymeren, insbesonders in Zubereitungen für das ETL-Verfahren.

Die erfindungsgemäß hergestellten Vernetzungskomponenten reagieren mit den Hydroxyl- und/oder Aminogruppen tragenden Polymeren bereits bei Temperaturen ab ca. 120°C unter Umesterung oder Umamidierung.

Als Spaltprodukt wird nur der Alkohol aus dem CH-aktiven Alkylester gefunden ; eine Abspaltung des CH-aktiven Alkylesters unter Freisetzung der Isocyanatgruppen und nachfolgende Vernetzung unter Ausbildung von Urethan-oder Harnstoffgruppen findet offensichtlich nicht statt. Dieser Reaktionsmechanismus ist aus neueren Untersuchungen über Malonsäurediethylester/Cyclohexyldiisocyanat-Additionsprodukte bekannt (Wicks, Kostyk ; J. Coat. Techn. 49 (1977)77).

Die erfindungsgemäß hergestellten Produkte sind überraschenderweise trotz des hohen Gehaltes an Harnstoffgruppen mit den üblichen Lacklösemitteln klar verdünnbar.

Die Produkte zeichnen sich auch durch eine gute Hydrolysestabilität aus und eignen sich deshalb besonders als Bestandteil von wasserlöslichen Lacken, insbesonders in kathodisch nach dem ETL-Verfahren abscheidbaren Zusammensetzungen.

Für die Herstellung der Vernetzungskomponenten werden als Diisocyanate bevorzugt solche eingesetzt, deren Isocyanatgruppen unterschiedliche Reaktivität aufweisen, beispielsweise 3-Isocyanatomethyl-3,5,5-trimethylcyclohexylisocyanat (IPDI) oder 2,4-Diisocyanatoluol.

Als CH-aktive Alkylester werden Verbindungen der allgemeinen Formel

$$X - CH_2 - COOR$$

eingesetzt, wobei

$$X = -COOR, -CN \text{ oder } CH_3\text{-}CO\text{-}$$

und R einen Alkylrest mit 1 bis 8 C-Atomen bedeutet. Vorzugsweise werden Malonsäuredimethylester oder Malonsäurediethylester verwendet.

Die erfindungsgemäß eingesetzten Polyamine entsprechen der allgemeinen Formel

$H_2N - (R\text{-}NH)_n - R\text{-}NH_2$, wobei n = 0 - 3 und R eine Alkylengruppe bedeuten.

Vertreter dieser Gruppe sind Alkylendiamine, wie Ethylendiamine und seine Homologen oder Polyalkylenpolyamine, wie Diethylentriamin, Triethylentetramin oder Tetrapropylenpentamin. Die ebenfalls einsetzbaren (Poly)aminoalkohole entsprechen der Formel
$H_2N - (R - NH)_n - R - OH$ (n = 0 - 3) oder
$OH - (R - NH)_n - R - OH$ (n = 1 - 3).

Besonders geeignete Vertreter dieser Gruppen sind Hydroxyethyldiethylentriamin oder Bishydroxyethyldiethylentriamin.

Die Reaktion zwischen dem Diisocyanat und dem CH-aktiven Alkylester wird bevorzugt in Anwesenheit von Lösemitteln, die keine aktiven Wasserstoffatome enthalten, wie z. B. Ethylacetat, Butylacetat, Toluol, Methylethylketon, Ethylenglykoldimethylether, etc., durchgeführt. Sie kann jedoch auch ohne Lösemittel durchgeführt werden. Vorzugsweise erfolgt die Reaktion unter Stickstoff und unter Ausschluß von Feuchtigkeit. Als Katalysator dient Natrium oder, bevorzugt Natriumphenolat, welches in einer Menge von 0,1 - 0,5 Gew.-%, bezogen auf das Gesamtgewicht der Reaktionskomponenten, eingesetzt wird.

Diisocyanat und CH-aktiven Alkylester werden in solchen Mengen verwendet, daß auf eine Isocyanatgruppe 1 bis 1,5 Mol, vorzugsweise 1,1 - 1,5 Mol CH-aktiver Alkylester kommen. Durch den vorgesehenen Überschuß an CH-aktiven Alkylester soll der Gehalt an unreagiertem Diisocyanat möglichst niedrig gehalten werden.

Die Reaktion wird so durchgeführt, daß man das Isocyanat, gegebenenfalls zusammen mit dem Lösemittel im Reaktionsgefäß vorlegt und den CH-aktivem Alkylester und den Katalysator, bevorzugt bei Raumtemperatur in 0,5 bis 10 Stunden kontinuierlich zugibt. Sobald der Isocyanatgehalt der Reaktionsmischung so weit abgesunken ist, daß theoretisch der gesamte CH-aktive Alkylester im Molverhältnis 1 : 1 mit den Isocyanatgruppen reagiert hat, erfolgt sofort die weitere Umsetzung mit dem Polyamin und/oder (Poly)aminoalkohol. Additionsprodukt und Polyamin und/oder (Poly)aminoalkohol werden in solchen Mengen eingesetzt, daß auf eine Isocyanatgruppe eine primäre oder sekundäre Aminogruppe oder eine Hydroxylgruppe kommt.

Das Polyamin und/oder der (Poly)aminoalkohol werden im Reaktionsgefäß zusammen mit einem der oben genannten aprotischen Lösemittel vorgelegt und das Additionsprodukt aus der 1. Reaktionsstufe so schnell zugegeben, daß die Reaktionstemperatur 100°C, vorzugsweise 60°C, nicht überschreitet. Anschließend wird das Reaktionsgemisch so lange auf 60°C erwärmt, bis der Isocyanatgehalt auf unter 0,5 Gew.-% abgesunken ist. Je nach Ansatzgröße ist die Reaktion nach etwa 1 - 5 Stunden beendet.

Die erfindungsgemäße Härtungskomponente kann in Zweikomponentensystemen zusammen mit einem zur Amid- und/oder Esterbildung mit Carbonsäure befähigten Kunstharz verwendet werden. Solche Kunstharze sind aus der Literatur bekannt. Es sind dies beispielsweise Polymerisate aus olefinisch ungesättigten Monomeren, die als Bestandteil Hydroxyester von olefinisch ungesättigten Carbonsäuren, wie Hydroxyalkylacrylate oder Aminoalkylacrylate enthalten. Eine weitere Gruppe sind die aus dimerisierten Fettsäuren und Polyaminen erhältlichen Polyaminopolyamide oder die z. B. durch Umsetzung von Epoxidharzen mit primären oder sekundären Aminen zugänglichen Aminopolyetherpolyole. Für die Formulierung von kathodisch abscheidbaren ETL-Zusammensetzungen eignen sich besonders die zuletzt genannten Aminopolyetherpolyole.

Das Verhältnis von Harz zu Härter richtet sich nach der gewünschten Vernetzungsdichte und liegt im allgemeinen im Bereich von 0,2 - 2 Estergruppen in der Härtungskomponente pro Hydroxyl- oder primärer bzw. sekundärer Aminogruppe im Polymeren. Zur Beschleunigung der Umesterung bzw. Umamidierung können die bekannten Katalysatoren, wie Metallsalze organischer Säuren, z. B. Zink-, Blei-, Eisen- Kupfer-, Chrom-, Cobalt-Acetat, -Octoat oder -Naphthenat zugesetzt werden.

Die Formulierung der Lacke sowie deren Verarbeitung nach den üblichen Auftragsverfahren, insbesonders dem ETL-Verfahren, sind dem Fachmann bekannt und in der Literatur beschrieben.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1 :

a) Herstellung der Härters
In ein Gemisch aus 222 g 3-Isocyanatomethyl-3,5,5-trimethylcyclohexylisocyanat und 176 g Diethylenglykoldimethylether werden innerhalb von 8 Stunden kontinuierlich bei Raumtemperatur 176 g Malonsäurediethylester und 0,8 g Natriumphenolat zugegeben. Man läßt so lange bei Raumtemperatur weiterreagieren, bis der Isocyanatgehalt 6,6 % beträgt. Das Reaktionsgemisch wird dann so schnell in eine Mischung aus 30,9 g Diethylentriamin und 220 g Diethylenglykoldimethylether gegeben, daß die Reaktionstemperatur 30°C nicht überschreitet. Anschließend erwärmt man so lange auf 60°C, bis der Isocyanatgehalt unter 0,1% ist.
b) Herstellung des Bindemittels
Es wird nach bekannten Methoden ein Aminopolyetherpolyol aus
65,5 % eines Bisphenol-A Epoxidharzesters mit einem Epoxidäquivalentgewicht von 480,
18,8 % eines Polyesters aus Trimethylolpropan, Adipinsäure, Isononansäure, und Tetrahydrophthalsäureanhydrid mit einer Säurezahl von 65 mg KOH/g und einer Hydroxylzahl von 310 mg KOH/g,
6,1 % Diethanolamin,
4,4 % 2-Ethylhexylamin,
5,2 % Diethylaminopropylamin
hergestellt. Das Produkt ist 65%ig in Propylenglykolmonomethylether gelöst und hat eine Aminzahl von 96 mg KOH/g.
c) Elektrotauchlackierung und Prüfung
108 g des Bindemittels 1 b werden mit 60 g Härter 1 a und mit 15 g 3 n-Ameisensäure gemischt und mit 817 g vollentsalztem Wasser verdünnt. Das Lackbad wird 24 Stunden gerührt und weist dann folgende Kenndaten auf :

| | |
|---|---|
| Festkörpergehalt : | 10 Gew.-% |
| pH-Wert: | 5,7 |
| Badleitfähigkeit: | 1060 $\mu Scm^{-1}$ |
| MEQ-Wert: | 38 |

Auf phosphatiertem, als Kathode geschaltetem Stahlblech erhält man nach Abscheidung bei 25°C Badtemperatur 1 min. bei 150 V und Härtung (30 min, 120°C) einen glatten Überzug mit einer Schichtdicke von 15 µm und einer Lösungsmittelbeständigkeit von mehr als 500 Doppelhüben mit Methylisobutylketon.

Beispiel 2 :

a) Herstellung eines Aminoalkohols
In eine Mischung aus 189 g Tetraethylenpentamin und 168 g Diethylenglykoldimethylether werden 204 g 4-Methyl-1,3-dioxolan-2-on so schnell zugetropft, daß die Reaktionstemperatur 60°C nicht überschreitet. Anschließend erwärmt man so lange auf 60°C, bis eine Aminzahl von 300 mg KOH/g erreicht ist.
b) Herstellung des Härters
In ein Gemisch aus 222 g 3-Isocyanatomethyl-3,5,5-trimethylcyclohexylisocyanat und 176 g Diethylenglykoldimethylether werden innerhalb von 8 Stunden kontinuierlich bei Raumtemperatur 176 g Malonsäurediethylester und 0,8 g Natriumphenolat gegeben. Man läßt so lange bei Raumtemperatur weiterreagieren, bis der Isocyanatgehalt 6,6 % beträgt. Das Gemisch wird dann so schnell in eine Mischung aus 101 g der 70%igen Lösung des Aminoalkohols 2 a und 0,5 g Dibutylzinndilaurat gegeben,

daß die Reaktionstemperatur 40°C nicht überschreitet. Anschließend erwärmt man so lange auf 60°C, bis der Isocyanatgehalt unter 0,1 Gew.-% ist.

c) Elektrotauchlackierung und Prüfung

108 g des Bindemittels aus Beispiel 1 b werden mit 43 g Härter aus Beispiel 2 b und mit 15 g 3 n-Ameisensäure gemischt und mit 834 g vollentsalztem Wasser verdünnt. Das Lackbad wird 24 Stunden gerührt und weist dann folgende Kenndaten auf:

| | |
|---|---|
| Festkörpergehalt: | 10 Gew.-% |
| pH-Wert: | 5,8 |
| Badleitfähigkeit: | 1060 $\mu Scm^{-1}$ |
| MEQ-Wert: | 45 |

Auf phosphatiertem, als Kathode geschaltetem Stahlblech erhält man nach Abscheidung bei 25°C Badtemperatur, 1 min bei 150 V und Härtung (30 min, 120°C) einen glatten Überzug mit einer Schichtdicke von 23 µm und einer Lösungsmittelbeständigkeit von mehr als 500 Doppelhüben mit Methylisobutylketon.

Vergleichsbeispiel:

108 g des Aminopolyetherpolyols aus Beispiel 1 b werden mit 43 g eines nach DE-OS 25 50 156 hergestellten Umsetzungsproduktes aus Malonsäurediethylester, Trimethylolpropan und 3-Isocyanato-3,5,5-trimethylcyclohexylisocyanat (70%ig in Diethylenglykoldimethylether) und mit 11,7 g 3n-Ameisensäure vermischt und mit 237 g vollentsalztem Wasser verdünnt. Das Lackbad wurde 24 Stunden gerührt und weist dann folgende Kenndaten auf:

| | |
|---|---|
| Festkörpergehalt: | 10 Gew.-% |
| pH-Wert: | 5,8 |
| Badleitfähigkeit: | 980 $\mu Scm^{-1}$ |
| MEQ-Wert: | 37 |

Auf phosphatiertem, als Kathode geschaltetem Stahlblech erhält man nach der Abscheidung bei 25°C Badtemperatur, 1 min bei 150 V und Härtung (30 min, 140°C) einen glatten Überzug mit einer Schichtdicke von 19 µm und einer Lösungsmittelfestigkeit von weniger als 200 Doppelhüben mit Methylisobutylketon.

## Ansprüche

1. Verfahren zur Herstellung von Vernetzungskomponenten für Hydroxyl- und/oder primäre und/oder sekundäre Aminogruppen aufweisende Lackbindemittel, dadurch gekennzeichnet, daß man 1 Mol eines Diisocyanates in einer ersten Stufe, vorzugsweise bei Raumtemperatur, in Gegenwart von 0,1 bis 0,5 Gew.-%, bezogen auf das Gesamtgewicht der Reaktionsmasse, an Natrium oder vorzugsweise Natriumphenolat als Katalysator, mit 1,0 bis 1,5 Mol eines CH-aktiven Alkylesters der allgemeinen Formel X - $CH_2$ - COOR, wobei X = COOR, - CN oder $CH_3$ - CO -und R einen Alkylrest mit 1 bis 8 C-Atomen bedeutet, umsetzt und die freien Isocyanatgruppen des Reaktionsproduktes in einer zweiten Stufe mit stöchiometrisch äquivalenten Mengen von Polyaminen der Formel

$$H_2N - (R - NH)_n - R - NH_2,$$

mit n = 0 bis 3 und/oder von (Poly)aminoalkoholen der Formel

$$H_2N-(R-NH)_n R$$

R - OH, mit n = 0 bis 3, oder

$$HO-(R-NH)_n-R-OH,$$

mit n = 1 bis 3, wobei R in allen Fällen einen Alkylenrest darstellt, reagiert.

2. Verfahren nach Anspruch 1, dadurch gekennzeichnet, daß man die Umsetzung des Diisocyanats in Gegenwart eines aprotischen Lösemittels durchführt.

3. Verfahren nach den Ansprüchen 1 und 2, dadurch gekennzeichnet, daß man als Diisocyanat eine Verbindung mit unterschiedlich reaktiven Isocyanatgruppen einsetzt.

4. Verfahren nach Anspruch 3, dadurch gekennzeichnet, daß man als Diisocyanat das 3-Isocyanatomethyl-3,5,5-trimethylcyclohexylisocyanat einsetzt.

5. Verfahren nach den Ansprüchen 1 bis 4, dadurch gekennzeichnet, daß man als CH-aktiven Alkylester den Methyl-bzw. Ethylester der Malonsäure einsetzt.

6. Verfahren nach den Ansprüchen 1 bis 5, dadurch gekennzeichnet, daß man in der ersten Reaktionsstufe pro Isocyanatgruppe 1,1 bis 1,5 Mol des CH-aktiven Alkylesters einsetzt.

7. Vernetzungskomponenten, erhältlich nach den Verfahren der Ansprüche 1 bis 6.

8. Verwendung der nach den Ansprüchen 1 bis 6 hergestellten Vernetzungskomponenten zur Härtung von Hydroxyl-und/oder Aminogruppen aufweisenden Polymeren.

9. Verwendung der nach den Ansprüchen 1 bis 6 hergestellten Vernetzungskomponenten in elektrisch abscheidbaren Zubereitungen.

## Claims

1. Process for the preparation of crosslinking components for paint binders containing hydroxyl and/or primary and/or secondary amino groups, characterized in that 1 mol of a diisocyanate is reacted, in a first stage, preferably at room temperature, in the presence of 0.1 to 0.5% by weight, relative to the total weight of the reaction mass, of sodium or, preferably, sodium phenolate as catalyst, with 1.0 to 1.5 mol of a CH-active alkyl ester of the general formula $X - CH_2 - COOR$ in which X denotes -COOR, -CN or $CH_3$-CO- and R denotes an alkyl radical having 1 to 8 C atoms, and the free isocyanate groups of the reaction product are reacted in a second stage with stoichiometrically equivalent amounts of polyamines of the formula $H_2N-(R-NH)_n-R-NH_2$ in which n = 0 to 3 and/or (poly)amino alcohols of the formula $H_2N-(R-NH)_n-R-OH$ in which n = 0 to 3, or $HO-(R-NH)_n-R-OH$ in which N = 1 to 3, R in all cases representing an alkylene radical.

2. Process according to Claim 1, characterized in that the reaction of the diisocyanate is carried out in the presence of an aprotic solvent.

3. Process according to Claims 1 and 2, characterized in that the diisocyanate employed is a compound having isocyanate groups of differing reactivity.

4. Process according to Claim 3, characterized in that the diisocyanate employed is 3-isocyanatomethyl-3,5,5-trimethylcyclohexyl isocyanate.

5. Process according to Claims 1 to 4, characterized in that the CH-active alkyl ester employed is the methyl or ethyl ester of malonic acid.

6. Process according to Claims 1 to 5, characterized in that 1.1 to 1.5 mol of the CH-active alkyl ester is employed per isocyanate group in the first reaction stage.

7. Crosslinking components obtainable in accordance with the processes of Claims 1 to 6.

8. The use of the crosslinking components prepared in accordance with Claims 1 to 6 for curing polymers containing hydroxyl and/or amino groups.

9. The use of the crosslinking components prepared in accordance with Claims 1 to 6 in formulations which can be deposited by electrical means.

## Revendications

1. Procédé de préparation de constituants de réticulation pour liants pour laques présentant des groupes hydroxyle et/ou amine primaires et/ou secondaires, caractérisé en ce que l'on fait réagir 1 mole d'un

diisocyanate dans une première étape, de préférence à la température ambiante, en présence de 0,1 à 0,5% en poids, par rapport au poids total de la masse réactionnelle, de sodium ou de préférence de phénolate de sodium en tant que catalyseur, avec 1,0 à 1,5 mole d'un alkylester CH-actif de formule générale $X - CH_2 - COOR$ dans laquelle X =-COOR, - CN ou $CH_3 - CO -$ et R représente un reste alkyle ayant de 1 à 8 atomes de carbone, et l'on fait réagir les groupes isocyanate libres du produit réactionnel dans une deuxième étape avec des quantités stoechiométriquement équivalentes de polyamines de formule $H_2N -(- R - NH -)_n- R - NH_2$, avec n = 0 à 3 et/ou de (poly)aminoalcools de formule $H_2N -(- R - NH -)_n- R - OH$, avec n = 0 à 3, ou $HO -(- R - NH -)_n- R - OH$, avec n = 1 à 3, R représentant dans tous les cas un reste alkylène.

2. Procédé selon la revendication 1, caractérisé en ce que l'on effectue la réaction du diisocyanate en présence d'un solvant aprotique.

3. Procédé selon les revendications 1 et 2, caractérisé en ce que l'on utilise comme diisocyanate un composé à groupes isocyanates différemment réactifs.

4. Procédé selon la revendication 3, caractérisé en ce que l'on utilise comme diisocyanate le 3-isocyanatométhyl-3,5,5-triméthylcyclohexylisocyanate.

5. Procédé selon les revendications 1 à 4, caractérisé en ce que l'on utilise comme alkylester CH-réactif le méthyl- ou éthylester de l'acide malonique.

6. Procédé selon les revendications 1 à 5, caractérisé en ce que, dans la première étape réactionnelle, l'on utilise 1,1 à 1,5 mole d'alkylester CH-actif par groupe isocyanate.

7. Constituants de réticulation qui peuvent être obtenus selon le procédé des revendications 1 à 6.

8. Utilisation des constituants de réticulation préparés selon les revendications 1 à 6 pour le durcissement de polymères présentant des groupes hydroxyle et/ou amine.

9. Utilisation des constituants de réticulation préparés selon les revendications 1 à 6 dans des préparations précipitables électriquement.